# EUROPÄISCHE PATENTSCHRIFT

(11) **EP 2 804 786 B1**
(45) Veröffentlichungstag und Bekanntmachung des Hinweises auf die Patenterteilung: **09.03.2016**
(21) Anmeldenummer: 13700161.6
(22) Anmeldetag: 10.01.2013
(51) Int. Cl.: B60R 9/04

(54) **DACHRELING FÜR EIN KRAFTFAHRZEUG**
ROOF RAIL FOR A VEHILCE
RAIL DE TOIT POUR UN VÉHICULE

(30) Priorität: 17.01.2012 DE 202012000436 U
(43) Veröffentlichungstag der Anmeldung: 26.11.2014
(73) Patentinhaber: Hans und Ottmar Binder GmbH Oberflächenveredelung, 89558 Böhmenkirch (DE)
(72) Erfinder: SIRRENBERG, Stefan, 42279 Wuppertal (DE); BINDER, Hans, 89558 Böhmenkirch (DE); BINDER, Ottmar, 89558 Böhmenkirch (DE)
(74) Vertreter: Grosse, Rainer
(86) Internationale Anmeldenummer: PCT/EP2013/050389
(87) Internationale Veröffentlichungsnummer: WO 2013/107683

(56) Entgegenhaltungen:
- EP-A1- 0 657 324
- EP-A1- 0 689 965
- WO-A1-2005/049379
- WO-A2-2007/104388
- DE-U1-202011 001 621
- JP-A- 2007 253 928
- JP-A- 2009 298 230

## Beschreibung

Die Erfindung betrifft eine Dachreling für ein Kraftfahrzeug, mit mindestens einem Galeriestab und mit mindestens einem an dem Galeriestab befestigten Stützelement zur Überbrückung eines zwischen dem Galeriestab und dem Dach des Kraftfahrzeugs ausgebildeten Abstands und zur Festlegung der Dachreling am Dach des Kraftfahrzeug, sowie mit mindestens einer Abdeckung für das Stützelement, wobei Galeriestab, Stützelement und Abdeckung als separate Bauteile ausgebildet sind.

Eine Dachreling für ein Kraftfahrzeug kann nach dem Stand der Technik unterschiedlich ausgebildet sein. So gibt es einerseits flach auf dem Dach des Kraftfahrzeugs aufliegende Systeme, bei denen die Unterseite eines Galeriestabs der Dachreling direkt (oder unter Zwischenschaltung einer dünnen Kunststofffolie) auf dem Fahrzeugdach aufliegt oder andererseits Systeme, bei denen der Galeriestab ganz oder größtenteils mit Abstand zum Fahrzeugdach verläuft. Im letzten Falle sind Stützelemente erforderlich, die diesen Abstand bewirken. Bei der erfindungsgemäßen Dachreling handelt es sich um den letztgenannten Fall, also mindestens einen Galeriestab, der-über seine Länge - größtenteils beabstandet zum Fahrzeugdach verläuft. Diese erfindungsgemäßen Systeme können auch als "aufstehende Systeme" bezeichnet werden.

Bei bekannten aufstehenden Systemen hält ein Großteil des Verlaufs der Unterseite des mindestens einen Galeriestabs einen deutlich sichtbaren, gewollten Abstand zum Fahrzeugdach, wobei dieser Abstand durch mindestens ein Stützelement realisiert ist, das einen Kraftschluss zum Kraftfahrzeug herstellt. Ein solches Stützelement ist also sichtbar und oftmals leidlich schwer, d.h., das Gewicht der Dachreling wird entscheidend durch das Gewicht des Stützelements mitgeprägt. Ferner sind derartige Stützelemente oftmals mit einer Abdeckung versehen, um beispielsweise ein als Schmiedeteil hergestelltes Stützelement durch die Abdeckung an das optische Erscheinungsbild des Galeriestabs anzugleichen, d.h., die Abdeckung hat eine Oberfläche, die möglichst an die Oberfläche des Galeriestabs angeglichen ist. Dieser Angleich ist oftmals nicht befriedigend, jedoch besser als die Verwendung keiner Abdeckung, da das erwähnte Schmiedeteil einen ganz anderen optischen Eindruck vermittelt als der Galeriestab, der insbesondere im Strangpressverfahren hergestellt wird. Die bekannte Abdeckung wird oftmals mit dem Stützelement verklipst, wobei diese Verklipsung dazu neigt, sich selbst zu lösen, beispielsweise bei ungünstiger Kraftbeaufschlagung.

Aus der DE 20 2011 001 621 U1, die den Oberbegriff das Anspruchs 1 bildet, geht ein Dachreling für ein Kraftfahrzeug mit mindestens einem Galeriestab hervor. An dem Galeriestab ist ein Stützelement zur Festlegung am Dach des Kraftfahrzeugs vorgesehen. Ferner wird mit einer Abdeckung das Stützelement abgedeckt. Aus der WO 2007/104388 A2 geht eine Dachreling hervor, die mindestens einen Galeriestab aufweist, der mit Stützelementen an einem Dach eines Fahrzeugs befestigt ist. Aus der WO 2005/049379 A1 geht eine Dachreling für ein Fahrzeug hervor, die mindestens einen Galeriestab aufweist, der mit einem Stützelement an einem Dach des Fahrzeugs befestigt wird.

Der Erfindung liegt daher die Aufgabe zugrunde, eine Dachreling der eingangs genannten Art anzugeben, bei der eine optisch sehr ansprechende Ausgestaltung der einzelnen Bauteile vorliegt, die leicht gewichtig ist und kostengünstig erstellt werden kann. Ferner soll ein fester und sicherer Zusammenhalt aller Bauteile vorliegen.

Diese Aufgabe wird erfindungsgemäß dadurch gelöst, dass mindestens ein Endbereich des Galeriestabs als gebogener Abschnitt ausgebildet ist, dessen Stirnende ein Dachauflegeende bildet, dass das Stützelement als Strangpressteil ausgebildet ist und dass sich Stützelement und Abdeckung zumindest teilweise im Bereich des gebogenen Abschnitts befinden. Ferner ist vorgesehen, dass die Abdeckung mindestens einen Befestigungsbereich aufweist, der zur Befestigung der Abdeckung in einem zwischen Galeriestab und Stützelement ausgebildeten Spalt gehalten ist. Die Ausbildung des Stützelements als Strangpressteil ist einfach und kostengünstig realisierbar und ein derartiges Teil ist leichtgewichtig. Die Anordnung von Stützelement und Abdeckung im Bereich des gebogenen Abschnitts ist optisch ansprechend und für die sichere Befestigung der Dachreling am Fahrzeug günstig. Mindestens ein Bereich der erfindungsgemäßen Abdeckung bildet den Befestigungsbereich. Dieser muss zur Festlegung der Abdeckung gehalten werden. Erfindungsgemäß erfolgt dieses Halten dadurch, dass zwischen Galeriestab und Stützelement ein Spalt ausgebildet ist, in dem der Befestigungsbereich gehalten wird. Dieses Halten kann insbesondere durch Klemmwirkung und/oder durch Formschlusswirkung erfolgen. Da das Halten des Befestigungsbereichs in dem Spalt erfolgt, sind keine weiteren Befestigungsmittel, wie beispielsweise Klipsbefestigungsmittel, erforderlich, sondern es ist ausreichend, den Befestigungsbereich in diesem Spalt anzuordnen. Da er zwischen den Bauteilen Galeriestab und Stützelement liegt, ist die Abdeckung unverlierbar gehalten, da der Spalt insoweit einerseits von einem Teil des Galeriestabs und andererseits von einem Teil des Stützelements geschlossen ist. Damit ist eine sehr einfache und preisgünstige und auch sichere Befestigung der Abdeckung geschaffen.

Ferner ist es vorteilhaft, wenn zwischen dem Endbereich des Galeriestabs und einer Dachkonturlinie des Dachs ein Zwickel ausgebildet ist und wenn die Abdeckung als eine bis in eine Zwickelspitze reichende Zwickelabdeckung ausgebildet ist. Insbesondere weist die Abdeckung in einer Seitenansicht der Dachreling eine angenäherte Dreieckskontur auf.

Nach einer Weiterbildung der Erfindung ist vorgesehen, dass der Befestigungsbereich nur durch zum einander Befestigen von Galeriestab und Stützelement erfolgenden Zusammenführen dieser Bauteile zwischen diesen Bauteilen im Spalt gehalten ist. Die Aufgabe des Stützelements ist es, den Galeriestab mit Abstand zum Fahrzeugdach zu halten und die Befestigung am Kraftfahrzeug zu ermöglichen. Demgemäß muss das Stützelement mit dem Galeriestab verbunden sein. Bei diesem Verbinden werden Galeriestab und Stützelement zusammengeführt, insbesondere bis sie sich berühren und dann mittels geeigneter Maßnahmen aneinander befestigt, beispielsweise mittels einer Schraubverbindung. Die Anordnung ist nun so getroffen, dass der Befestigungsbereich der Abdeckung beim Zusammenführen von Galeriestab und Stützelement zwischen diesen Bauteilen angeordnet wird, und zwar im genannten Spalt, sodass im zusammengeführten Zustand der genannten Bauteile sich der Befestigungsbereich im Spalt befindet und dort gehalten wird, insbesondere durch Klemmwirkung, die dadurch erzeugt ist, dass Galeriestab und Stützelement aufeinander zugespannt werden, beispielsweise durch die erwähnte Schraubverbindung, und dadurch der Befestigungsbereich eingeklemmt wird.

Insbesondere ist dabei vorgesehen, dass das im Spalt bewirkte Halten des Befestigungsbereichs befestigungsmittelfrei erfolgt, d.h., neben dem Halten des Befestigungsbereichs im Spalt ist kein weiteres Element, beispielsweise eine Schraub- oder Klipsverbindung, vorhanden, um die Abdeckung zu befestigen.

Eine Weiterbildung der Erfindung sieht vor, dass das im Spalt bewirkte Halten des Befestigungsbereichs durch Formschlusswirkung und/oder durch zwischen dem Galeriestab und dem Stützelement herrschende Klemmwirkung erfolgt. Auf die Klemmwirkung wurde bereits vorstehend eingegangen. Die Formschlusswirkung ist dadurch erzielt, dass der Befestigungsbereich im nach oben, unten, vorne und hinten geschlossenen Spalt gefangen ist. Nur zu beiden Seiten des Spalts, also nach rechts und links - in Richtung der Längserstreckung des Galeriestabs gesehen - ist der Spalt offen, wobei hier der erwähnte Befestigungsbereich austritt und zu dem eigentlichen Abdeckelement der Abdeckung führt, sodass ein Herausrutschen des Befestigungsbereichs nach rechts oder links aus dem Spalt auch nicht möglich ist, da das Abdeckelement das Stützelement zumindest beidseitig abdeckt.

Nach einer Weiterbildung der Erfindung ist vorgesehen, dass sich an mindestens einer neben dem Spalt liegenden Stelle der Galeriestab unmittelbar am Stützelement abstützt. Dieses Abstützen erfolgt in Zusammenführrichtung, insbesondere Verspannrichtung der genannten Bauteile. Bei dieser Ausgestaltung ist daher vorgesehen, dass die aneinander befestigten Bauteile Galeriestab und Stützelement auch an mindestens einer Stelle aneinanderliegen. Alternativ ist es auch denkbar, dass die genannten Bauteile nicht aneinanderliegen, sondern dass sie zwischen sich den Befestigungsbereich der Abdeckung einklemmen und dadurch die Abdeckung halten und ferner dadurch auch - unter Zwischenschaltung des Befestigungsbereichs - aneinander befestigt sind. Im erstgenannten Fall ist es denkbar, dass der Befestigungsbereich im Spalt zwischen Galeriestab und Stützelement klemmend aufgenommen ist und es stützen sich Galeriestab und Stützelement unter Zwischenschaltung dieses Befestigungsbereichs aneinander ab und an der erwähnten mindestens einen neben dem Spalt liegenden Stelle liegt eine unmittelbare Abstützung von Galeriestab und Stützelement vor.

Eine Weiterbildung der Erfindung sieht vor, dass der Spalt von mindestens einer randoffenen Ausnehmung des Galeriestabs und/oder des Stützelements gebildet ist. So kann die Ausnehmung nur im Stützelement, nur im Galeriestab oder auch in beiden Bauteilen ausgebildet sein, d.h., ein Bereich des Spalts wird von der Ausnehmung des Galeriestabs und ein anderer Bereich des Spaltes von der Ausnehmung des Stützelements gebildet. Werden Galeriestab und Stützelement zusammenmontiert, so bildet sich der gesamte Spalt aus.

Wie erwähnt, ist vorgesehen, dass mindestens ein Endbereich des Galeriestabs als gebogener Abschnitt ausgebildet ist, dessen Stirnende ein Dachauflegeende bildet. Dieser Endbereich verläuft gebogen, wodurch sich der Abstand des Galeriestabs zunehmend durch die Biegung dem Fahrzeugdach nähert, derart, dass endseitig das Stirnende des Galeriestabs auf dem Fahrzeugdach aufliegt - gegebenenfalls unter Zwischenschaltung einer Unterlage auf dem Fahrzeugdach aufliegt. Demzufolge liegt das Stützelement vorzugsweise mit Abstand zur Auflegestelle.

Insbesondere kann vorgesehen sein, dass Galeriestab, Stützelement und/oder Abdeckung jeweils einstückig ausgebildet sind. Alternativ ist es auch möglich, dass sich der Galeriestab aus mehreren Teilstücken zusammensetzt.

Wie erwähnt ist das Stützelement als Strangpressteil beziehungsweise Strangpressbauteil ausgebildet. Besonders bevorzugt ist, wenn Galeriestab und/oder Abdeckung jeweils als Strangpressbauteil ausgebildet sind. Hierdurch wird jeweils eine sehr einfache Fertigung erzielt und insbesondere erreicht, dass diese Bauteile die gleiche Oberflächenstruktur aufweisen. So können sie beispielsweise alle drei aus einer Aluminiumlegierung bestehen, wobei die Oberfläche vom Galeriestab und von der Abdeckung in gleicher Art und Weise bearbeitet werden, beispielsweise poliert werden, und dadurch ein und derselbe optische Effekt erzielt wird, d.h., die Bauteile der Dachreling wirken optisch harmonisch farbgenau zusammen. Die Ausbildung des Stützelements als Strangpressbauteil hat ferner den Vorteil, dass es sehr leicht ausgebildet werden kann, also ein nur geringes Gewicht hat, was insbesondere dann gegeben ist, wenn die Breite des als Strangpressbauteil ausgebildeten Stützelements schmaler ist, als die Breite des Galeriestabs, wobei vorzugsweise die an beiden Seiten des Stützelements befindliche Abdeckung eine Breite aufweist, die ebenfalls kleiner ist als die Breite des Galeriestabs. Mithin ist die Breite des Stützelements noch geringer als die Breite der Abdeckung, weil das Stützelement ja innerhalb der Abdeckung angeordnet ist. Mithin handelt es sich um ein sehr schmales Stützelement, da es innerhalb der Abdeckung liegt, d.h., beidseitig sind die Wandstärken der Abdeckung zu berücksichtigen, wobei die Abdeckung im Hinblick auf ihr Außenmaß bezüglich der Breite kleiner als die Breite des Galeriestabs ist. Dies führt zu einer leichten und optisch zurücktretenden Ausgestaltung der Befestigung des Galeriestabs, die insbesondere nur im Zwickelbereich angeordnet ist. Dies schließt nicht die Verwendung von mindestens einer Mittelstütze zum Halten und Stützen des Galeriestabs aus.

Nach einer Weiterbildung der Erfindung ist vorgesehen, dass Galeriestab und/oder Abdeckung jeweils als Spritzgussteil und/oder jeweils als Druckgussteil ausgebildet sind und/oder dass die Abdeckung als Spritzgusskunststoffteil ausgebildet ist.

Neben der vorstehend erwähnten Möglichkeit der Ausgestaltung als Strangpressbauteil(e) von Galeriestab, Stützelement und/oder Abdeckung, sind also auch noch andere, bekannte Fertigungsmöglichkeiten für diese Bauteile gegeben.

Ferner ist es von Vorteil, wenn der Galeriestab, das Stützelement und/oder die Abdeckung jeweils aus Aluminium oder einer Aluminiumlegierung bestehen. Hierdurch wird ein und derselbe optische Eindruck bei den Bauteilen erzielt. Ferner führt dies zu einer haltbaren, korrosionsfreien und leichten Ausgestaltung.

Eine Weiterbildung der Erfindung sieht vor, dass die Befestigung des Stützelements an dem Galeriestab mittels mindestens einer Schraubverbindung erfolgt. Wird die Schraubverbindung angezogen, so nähern sich Stützelement und Galeriestab, wobei dabei der sich im Spalt befindliche Befestigungsbereich der Abdeckung gehalten wird, sobald die Bauteile miteinander verschraubt sind.

Ferner ist es vorteilhaft, dass der Galeriestab, das Stützelement und/oder die Abdeckung jeweils als Hohlprofil ausgebildet sind. Dies spart Gewicht und Material und damit Kosten. Ferner ermöglicht die Hohlprofilausgestaltung des Galeriestabs dass ein Einbringen von einfachen Befestigungsmitteln innerhalb des Galeriestabs möglich ist, um das Befestigen des Stützelements am Galeriestab vornehmen zu können.

Bevorzugt ist nach einer Ausgestaltung der Erfindung vorgesehen, dass die Schraubverbindung eine Nietmutter, insbesondere eine durch Festziehen der Schraubverbindung sich vernietende Nietmutter, aufweist, die dem Galeriestab zugeordnet ist und dass das Stützelement mindestens einen Befestigungsdurchbruch besitzt, den eine in die Nietmutter eingeschraubte Gewindeschraube durchsetzt. Die Nietmutter wird in eine Bohrung an der Unterseite des Galeriestabs mit einem Befestigungsbereich soweit eingesetzt, bis ein Kragen der Nietmutter an der Unterseite des Galeriestabs anliegt. Nunmehr wird die Gewindeschraube durch den Befestigungsdurchbruch des Stützelements gesteckt und in die Nietmutter eingeschraubt. Werden nun die Bauteile Stützelement und Galeriestab durch Festziehen der Schraubverbindung miteinander verschraubt, so bildet die Nietmutter innerhalb des als Hohlprofil ausgebildeten Galeriestabs durch das Festziehen der Schraubverbindung einen Wulst durch Verformung des Befestigungsbereichs der Nietmutter aus. Dieser Wulst bildet einen Flansch, der ein Gegenlager zum Kragen bildet, d.h., die Wandstärke des Galeriestabs wird zwischen Flansch und Kragen aufgenommen. Damit ist die Nietmutter am Galeriestab vernietet, und durch Festziehen der Schraubverbindung werden Stützelement und Galeriestab fest miteinander verspannt. Alternativ kann das Vernieten der Nietmutter auch mit einer speziellen Vernietvorrichtung erfolgen und dann das Verschrauben von Galeriestab und Stützelement erfolgen.

Eine Weiterbildung der Erfindung sieht vor, dass der Abdeckung ein vorzugsweise separates, insbesondere plattenförmiges Bodenelement zugeordnet ist. Dieses Bodenelement kann optional vorhanden sein. Ist es vorhanden, so dient es vorzugsweise zur Befestigung der erwähnten Unterlage, die sich zwischen dem Fahrzeugdach und der Dachreling befindet beziehungsweise befinden kann.

Insbesondere kann vorgesehen sein, dass das Bodenelement mindestens eine Öffnung besitzt, die von mindestens einem Fuß des Stützelements durchsetzt ist. Der Fuß dient der Befestigung der Dachreling am Fahrzeug.

Eine Weiterbildung der Erfindung sieht vor, dass das Bodenelemerit durch Klipswirkung und/oder Klemmwirkung an der Abdeckung gehalten ist. Die Abdeckung befindet sich - in Längserstreckung des Galeriestabs gesehen - vorzugsweise beidseitig des Stützelements und auch auf der Stirnseite des Stützelements, die dem Dachauflegeende des Galeriestabs abgewandt liegt. Es ist demzufolge - im Längsschnitt gesehen - U-förmig gestaltet. Um ein Halten des Bodenelements an der Abdeckung zu bewirken, kann das erwähnte Klemmen und/oder erwähnte Klipsen erfolgen. So ist es insbesondere möglich, das Bodenelement zwischen den Innenseiten der Abdeckung zu verklemmen oder das Bodenelement weist eine hochstehende Randkante auf, die sich an den Außenseiten der Abdeckung abstützt und dort durch Klemmwirkung hält. Zusätzlich oder alternativ ist die Klipswirkung möglich. Im erstgenannten Fall ist das Bodenelement von außen her nicht sichtbar, da es im Innern der Abdeckung unverlierbar aufgenommen wird, im zweiten Fall ist der erwähnte umlaufende Rand von außen her sichtbar und auch unverlierbar zwischen Abdeckung und Fahrzeugdach angeordnet.

Es ist ferner ein Verfahren zur Befestigung einer Abdeckung einer Dachreling für ein Kraftfahrzeug vorteilhaft, insbesondere einer Dachreling wie vorstehend beschrieben, wobei die Dachreling mindestens einen Galeriestab, mindestens ein an dem Galeriestab befestigtes Stützelement und mindestens die Abdeckung aufweist und das Stützelement zur Überbrückung eines zwischen dem Galeriestab und dem Dach des Kraftfahrzeugs ausgebildeten Abstands und zur Festlegung der Dachreling am Dach des Kraftfahrzeugs dient und mit der Abdeckung das Stützelement abgedeckt wird, wobei Galeriestab, Stützelement und Abdeckung als separate Bauteile ausgebildet werden, und wobei an der Abdeckung mindestens ein Befestigungsbereich ausgebildet wird, der zur Befestigung der Abdeckung in einem zwischen Galeriestab und Stützelement ausgebildeten Spalt gehalten wird.

Ferner ist insbesondere vorgesehen, dass der Befestigungsbereich nur durch zum aneinander Befestigen von Galeriestab und Stützelement erfolgenden Zusammenführen dieser Bauteile zwischen diesen Bauteilen im Spalt gehalten wird.

Die Zeichnungen veranschaulichen die Erfindung anhand von Ausführungsbeispielen und zwar zeigt:
- Figur 1a: eine perspektivische Ansicht einer Dachreling für ein Kraftfahrzeug,
- Figur 1b: eine Einzelteildarstellung der Dachreling im Bereich eines Endes von ihr,
- Figur 2: eine Seitenansicht der Dachreling im Endbereich im zusammengebauten Zustand,
- Figur 3: eine Detailansicht der Dachreling im Befestigungsbereich ohne die Darstellung einer Abdeckung,
- Figur 4: eine der Figur 3 entsprechende Darstellung jedoch mit Abdeckung und ohne Galeriestab,
- Figur 5: ein Stützelement und die Abdeckung der Dachreling mit Blick von oben,
- Figur 6: eine dreidimensionale Ansicht des Stützelements,
- Figuren 7 und 8: eine Schraubverbindung zur Befestigung des Stützelements an dem Galeriestab,
- Figur 9: eine Längsschnittansicht der Dachreling im Endbereich nach einem ersten Ausführungsbeispiel,
- Figur 10: eine Längsschnittansicht der Dachreling im Endbereich nach einem zweiten Ausführungsbeispiel,

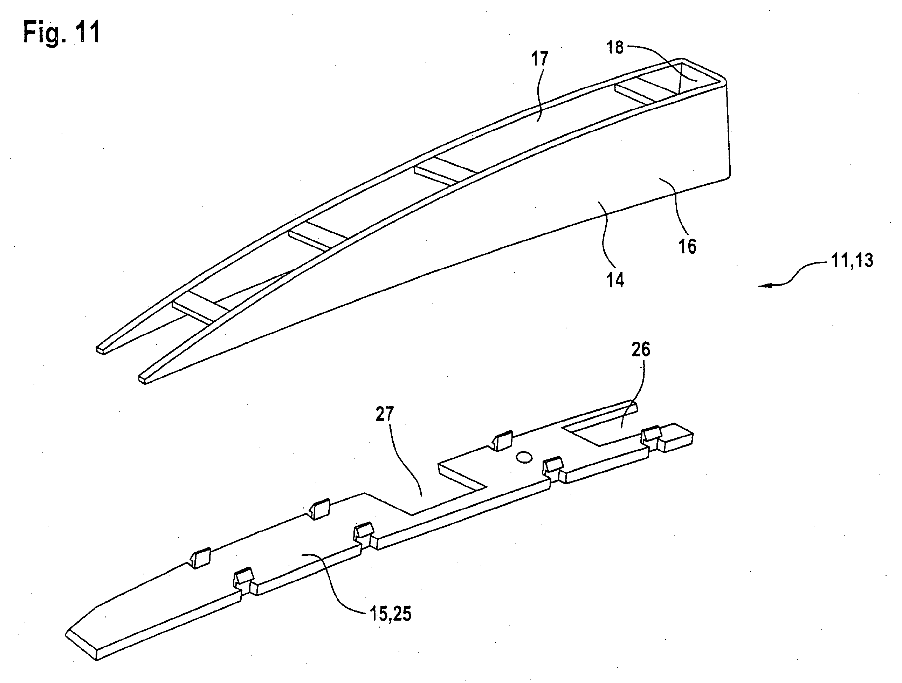

- Figur 11: die Abdeckung der Dachreling im auseinandergebauten Zustand,
- Figur 12: die Abdeckung der Dachreling in Unteransicht und
- Figur 13 und 14: Querschnitte durch die Dachreling im Befestigungsbereich nach einem weiteren Ausführungsbeispiel.

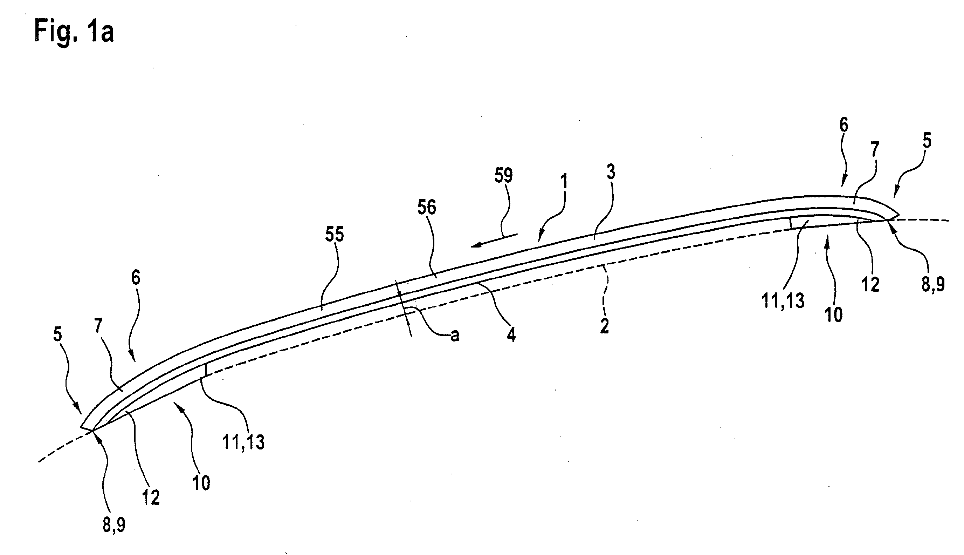

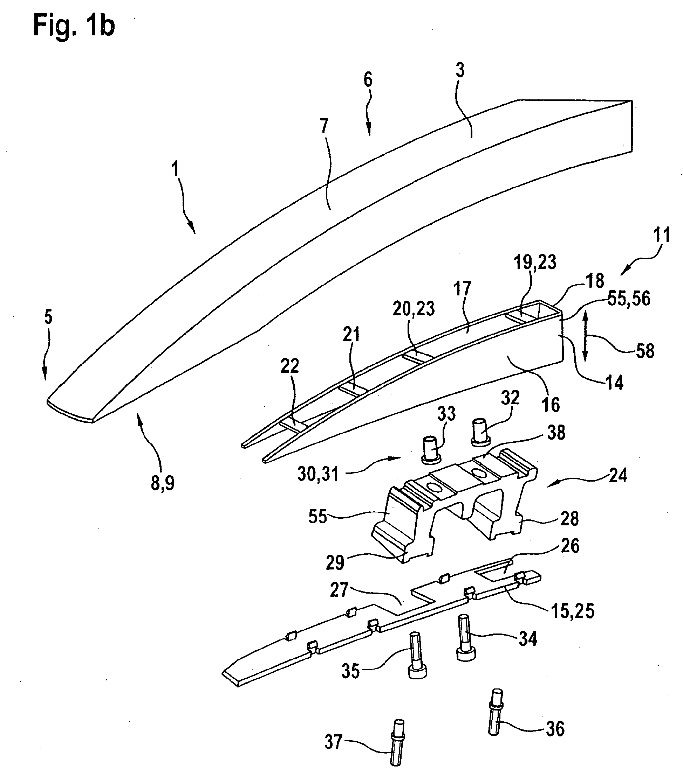

Die Figur 1 a zeigt eine perspektivische Ansicht einer Dachreling 1 für ein Kraftfahrzeug. Vom Kraftfahrzeug ist lediglich eine gestrichelte Dachkonturlinie 2 des Dachs des Kraftfahrzeugs dargestellt. Es ist erkennbar, dass ein Galeriestab 3 der Dachreling 1 mit einem Abstand a zur Dachkonturlinie 2 verläuft, d.h., die Unterseite 4 des Galeriestabs 3 liegt nicht auf dem Dach des Fahrzeugs auf, sondern hält den Abstand a ein. Lediglich die beiden Enden 5 des Galeriestabs 3 reichen bis zur Dachkonturlinie 2, d.h., sie liegen auf dem Dach des Kraftfahrzeugs - gegebenenfalls unter Zwischenschaltung einer nicht dargestellten Unterlage - auf. Um dieses Aufliegen zu erreichen sind die Endbereiche 6 des Galeriestabs 3 als gebogene Abschnitte 7 ausgebildet, derart, dass die Stirnenden 8 Dachauflegeenden 9 bilden, d.h., die Stirnenden 8 liegen in der Dachkonturlinie 2, liegen also auf dem Dach des Kraftfahrzeugs auf. Zwischen der Dachkonturlinie 2 und der Unterseite 4 des Galeriestabs 3 wird in den Endbereichen 6 jeweils ein etwa dreieckförmiger Zwickel 10 gebildet. In dem jeweiligen Zwickel 10 befindet sich jeweils ein Stützelement 24 zur Überbrückung eines zwischen dem Galeriestab 3 und dem Dach des Kraftfahrzeugs ausgebildeten Abstands und zur Festlegung der Dachreling 1 am Dach des Kraftfahrzeugs. Das jeweilige Stützelement 24 ist in der Figur 1 a nicht ersichtlich, weil es jeweils durch eine Abdeckung 11 abgedeckt wird. Da die jeweilige Abdeckung 11 bis in die Zwickelspitze 12 des jeweiligen Zwickels 10 reicht, handelt es sich um eine Zwickelabdeckung 13. Insofern weist die Abdeckung 11 - in der Seitenansicht - eine angenäherte Dreieckskontur auf.

Die Figur 1b zeigt Einzelteile der Dachreling 1 in einem Endbereich 6. Von dem Galeriestab 3 ist der gekrümmte Abschnitt 7 ersichtlich. Die Abdeckung 11 ist als ein Abdeckelement 14 ausgebildet und ihr kann ein Bodenelement 15 zugeordnet sein. Das Abdeckelement 14 ist - im Längsschnitt gesehen - U-förmig gestaltet und besitzt zwei Seitenwände 16 und 17 sowie eine die beiden Seitenwände 16 und 17 verbindende Stirnwand 18. Die Innenseiten der Seitenwände 16 und 17 sind über Stege 19, 20, 21 und 22 miteinander verbunden. Die Stege 19 und 20 bilden jeweils einen Befestigungsbereich 23 zur Befestigung der Abdeckung 11. Hierauf wird nachstehend noch näher eingegangen. Die Figur 1b zeigt ferner das Stützelement 24, das sich im montierten Zustand der Dachreling 1 insbesondere größtenteils innerhalb der Abdeckung 11 befindet. Das der Abdeckung 11 zugeordnete Bodenelement 15 ist als Bodenplatte 25 ausgebildet und befindet sich - im zusammengebauten Zustand der Dachreling 1 - im unteren Bereich der Abdeckung 11, und zwar zwischen den Seitenwänden 16 und 17, wobei es insbesondere als randoffene Ausnehmungen ausgebildete Öffnungen 26 und 27 aufweist, die von Füßen 28 und 29 des Stützelements 24 durchgriffen werden. Ferner zeigt die Figur 1b zwei Schraubverbindungen 30 und 31, bestehend aus jeweils einer Nietmutter 32 und 33 sowie jeweils einer Gewindeschraube 34 und 35. Ferner zeigt die Figur 1b zwei Gewindebundbolzen 36 und 37, die der Befestigung der Dachreling 1 auf dem in Figur 1b nicht dargestellten Dachs des Kraftfahrzeugs dienen.

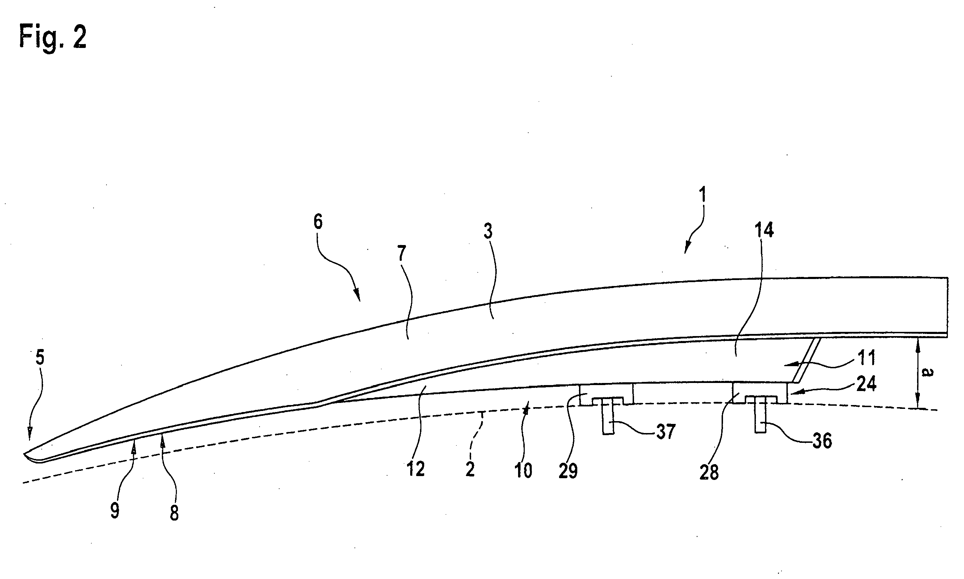

Wie sich aus der Seitenansicht der Figur 2 ergibt, ragen die Füße 28 und 29 des Stützelements 24 zumindest teilweise nach unten aus der Abdeckung 11 heraus. Es ist erkennbar, dass die Füße 28 und 29 mit ihren Unterseiten auf dem Dach des Fahrzeugs aufliegen, d.h., die Unterseiten befinden sich fluchtend zur Dachkonturlinie 2. Der verbleibende Spalt zwischen Dachkonturlinie 2 und Dachreling 1 wird aufgefüllt von einer nicht dargestellten Unterlage, die folienartig ausgebildet ist und zwischen Dachreling 1 und Fahrzeugdach angeordnet wird. Alternativ ist es auch möglich, dass die Abdeckung 11 nach unten hin länger ausgestaltet ist, also die Füße 28 und 29 abdeckt. Ferner ist nach einer weiteren Alternative auch die Ausgestaltung denkbar, dass die Füße 28 und 29 in Vertiefungen des Dachs des Kraftfahrzeugs eintreten, derart, dass nunmehr die Unterseite der Abdeckung 11 und das Dachauflegeende 9 des Galeriestabs 3 auf dem Dach des Fahrzeugs aufliegen. Auch hier ist es natürlich jeweils möglich, eine dünne Unterlage zwischenzuschalten.

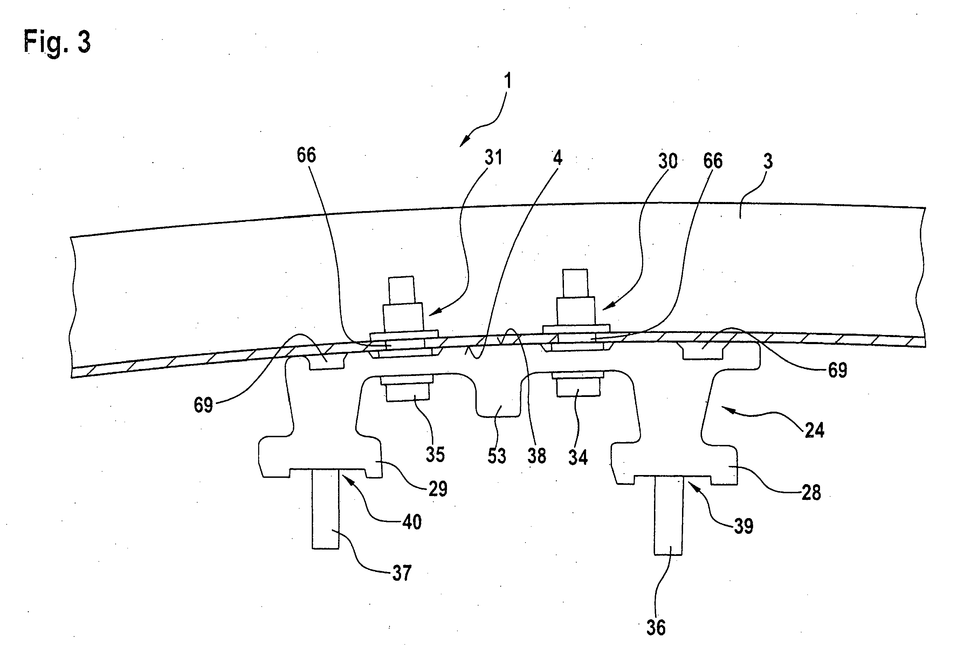

Die Figuren 3 bis 6 zeigen nähere Ausgestaltungen der erfindungsgemäßen Dachreling 1 im Befestigungsbereich. Gemäß Figur 3 ist erkennbar, dass das Stützelement 24 mittels der Schraubverbindungen 30 und 31 an dem Galeriestab 3 befestigt ist. Durch Anziehen der Schraubverbindungen 30 und 31 wird die Oberseite 38 des Stützelements 24 gegen die Unterseite 4 des Galeriestabs 3 gespannt. An den Unterseiten der Füße 28 und 29 befinden sich Gewindebohrungen 39 und 40, in die die Gewihdebundbolzen 36 und 37 derart eingeschraubt sind, dass ihr jeweiliger Bund an der zugehörigen Unterseite anliegt. Der nunmehr noch herausragende Gewindebereich jedes Gewindebundbolzens 36, 37 wird in entsprechende Aufnahmebohrungen am Dach des Kraftfahrzeugs eingesteckt und mittels Muttern oder dergleichen am Kraftfahrzeug befestigt.

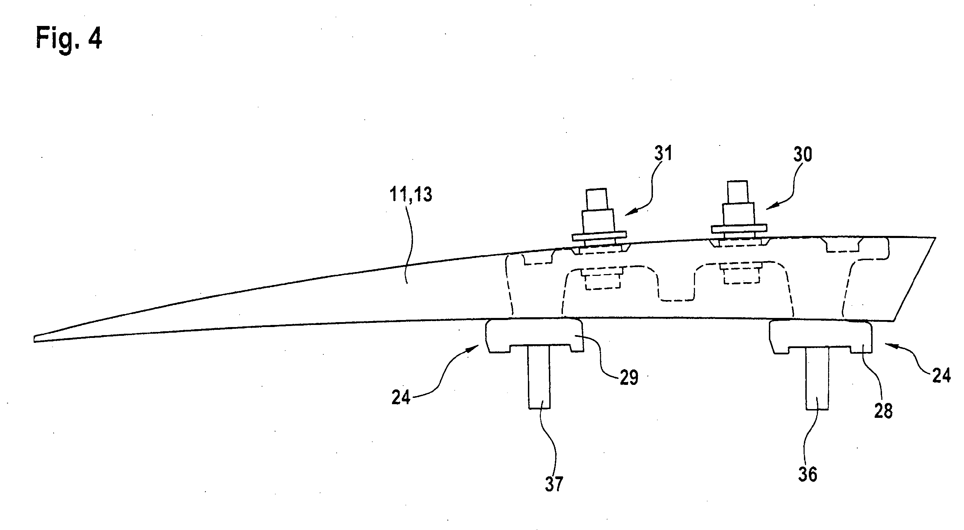

Die Figur 4 ergänzt die Darstellung der Figur 3 insofern, als dort zusätzlich die Abdeckung 11 dargestellt ist. Der Galeriestab 3 ist in Figur 4 nicht abgebildet. Die beiden Schraubverbindungen 30 und 31 sind in den Figuren 3 und 4 im verschraubten Zustand gezeigt.

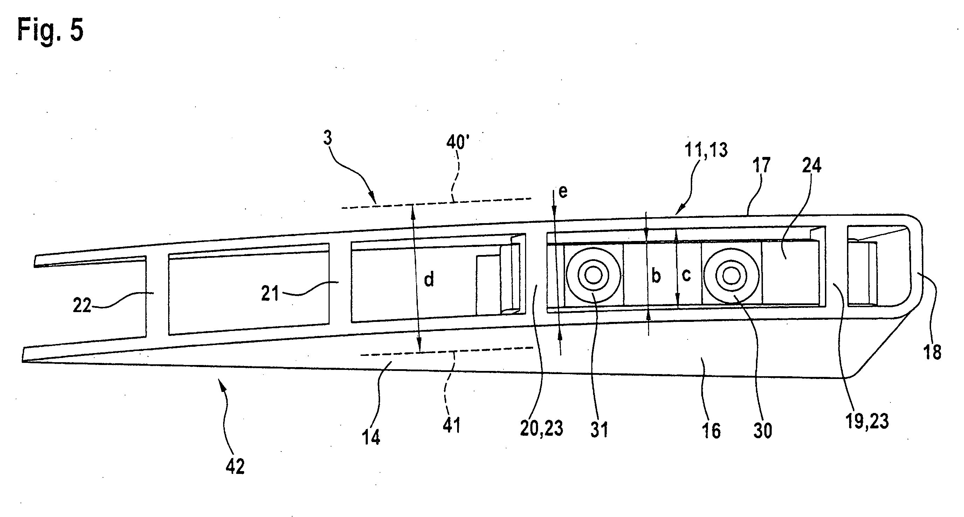

Der Figur 5 ist zu entnehmen, dass - im zusammengebauten Zustand - sich das Stützelement 24 innerhalb der Abdeckung 11 befindet, d.h., die Breite b des Stützelements 24 ist kleiner als die innere Breite c der Abdeckung 11 zwischen den Innenseiten der Seitenwände 16 und 17. Mit gestrichelten Linien 40' und 41 ist die Breite d des in Figur 5 nicht dargestellten Galeriestabs 3 angedeutet. Es ist erkennbar, dass diese Breite d größer, insbesondere erheblich größer als die äußere Breite e der Abdeckung 11 ist. Insofern gilt d größer e, e größer c und c größer b. Ferner ist aus der Figur 5 erkennbar, dass - in Längserstreckung des Galeriestabs 3 gesehen - sich das Stützelement 24 nur über eine Teillängserstreckung der Abdeckung 11 erstreckt, also nicht bis in den Zwickelspitzenbereich 42 hineinreicht.

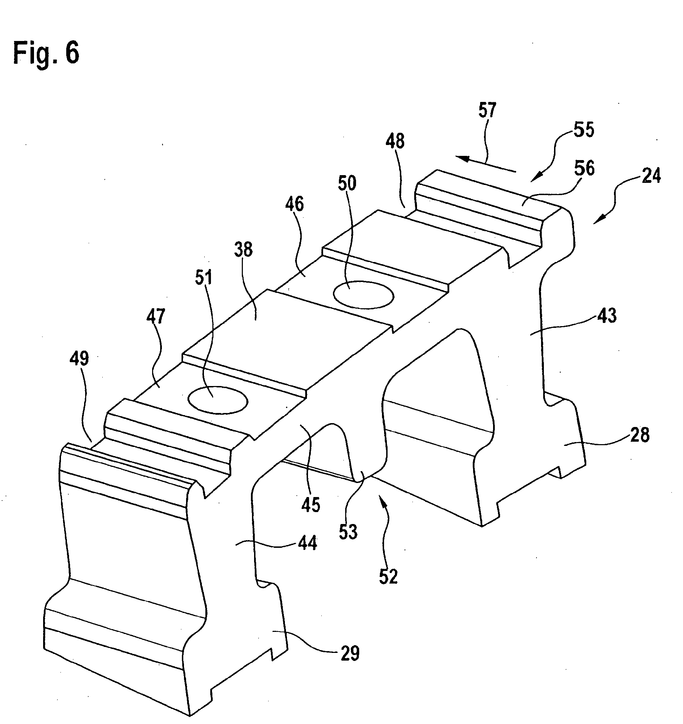

Die Figur 6 zeigt das Stützelement 24 in perspektivischer Darstellung. Es ist brückenartig aufgebaut und weist daher zwei Säulen 43 und 44 auf, die unten die Füße 28 und 29 aufweisen. Die beiden Säulen 43 und 44 werden über einen Verbindungssteg 45 verbunden, der an seiner Oberseite 38 zwei Nuten 46 und 47 für Teile der Schraubverbindungen 30 und 31 und zwei als randoffene Ausnehmungen 48' und 49' ausgebildete Nuten 48 und 49 für die Befestigungsbereich 23 der Abdeckung 11 aufweisen. In den Nuten 46 und 47 befinden sich Befestigungsdurchbrüche 50 und 51. An der Unterseite 52 des Verbindungsstegs 45 ist eine nach unten ragende Stützwand 53 ausgebildet.

Gemäß Figur 6 bildet das Stützelement 24 ein separates Bauteil 55 der Dachreling 1, das aus einer Aluminiumlegierung besteht und im Strangpressverfahren hergestellt ist, also ein Strangpressbauteil 56 ist. Die Strangpressrichtung ist in Figur 6 mittels eines Pfeils 57 angedeutet. Da die Unterseite der Füße 28 und 29 jeweils - aufgrund der Dachkontur des Fahrzeugsdachs - schräg verläuft, erfolgt nach der Strangpressherstellung eine entsprechende mechanische Bearbeitung des Stützelements 24. Natürlich müssen dann auch die Befestigungsdurchbrüche 50 und 51 erstellt werden. Das Stützelement 24 ist einstückig ausgebildet.

Gemäß Figur 1b handelt es sich bei der Abdeckung 11, also dem Abdeckelement 14, um ein separates Bauteil 55 der Dachreling 1. Die Abdeckung 11 besteht aus einer Aluminiumlegierung. Die Abdeckung 11 ist ein Strangpressbauteil 56, wobei die Strangpressrichtung mit dem Pfeil 58 angedeutet ist. Da - wie die Figur 1b zeigt - die Stege 19 bis 22 nicht über die gesamte jeweilige Höhe der Abdeckung 11 verlaufen, werden sie - nach dem Strangpressvorgang - entsprechend mechanisch gekürzt. Die Abdeckung 11 ist einstückig ausgebildet. Die Abdeckung 11 ist insbesondere als Hohlprofil ausgebildet.

Gemäß Figur 1 a handelt es sich bei dem Galeriestab 3 um ein separates Bauteil 55 der Dachreling 1. Der Galeriestab 3 besteht aus einer Aluminiumlegierung und ist vorzugsweise als Hohlprofil ausgebildet. Der Galeriestab 3 wird im Strangpressverfahren hergestellt und stellt daher ein Strangpressbauteil 56 dar, wobei die Strangpressrichtung in der Figur 1 a mittels eines Pfeils 59 angegeben ist. Nach dem Strangpressen erfolgt gegebenenfalls ein entsprechendes Biegen des Galeriestabs im Bereich zwischen seinen Endbereichen 6 zur Angleichung an die Dachkonturlinie 2 des entsprechenden Fahrzeuges. Ferner werden die gebogenen Endbereiche 6 nach dem Strangpressvorgang erzeugt. Der Galeriestab 3 ist einstückig ausgebildet. Alternativ ist auch eine mehrstückige, zusammengesteckte Ausbildung möglich.

Gemäß Figur 1b ist das Bodenelement 15 im Kunststoffspritzverfahren hergestellt, es besteht somit aus Kunststoff. Das Bodenelement 15 ist bevorzugt einstückig ausgebildet. Es kann alternativ aus Aluminium oder einer Aluminiumlegierung bestehen.

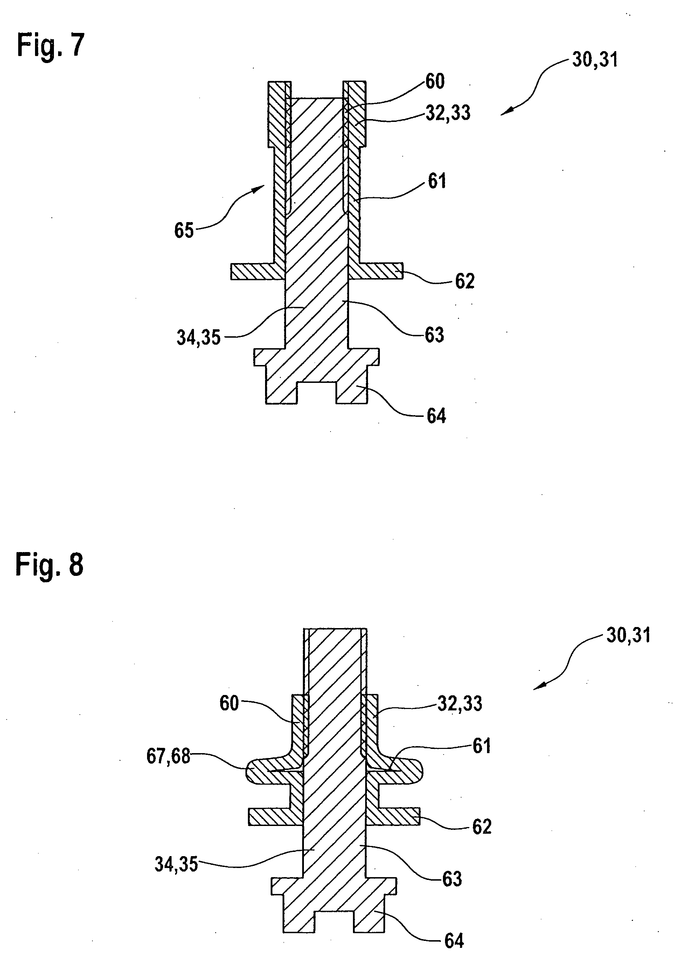

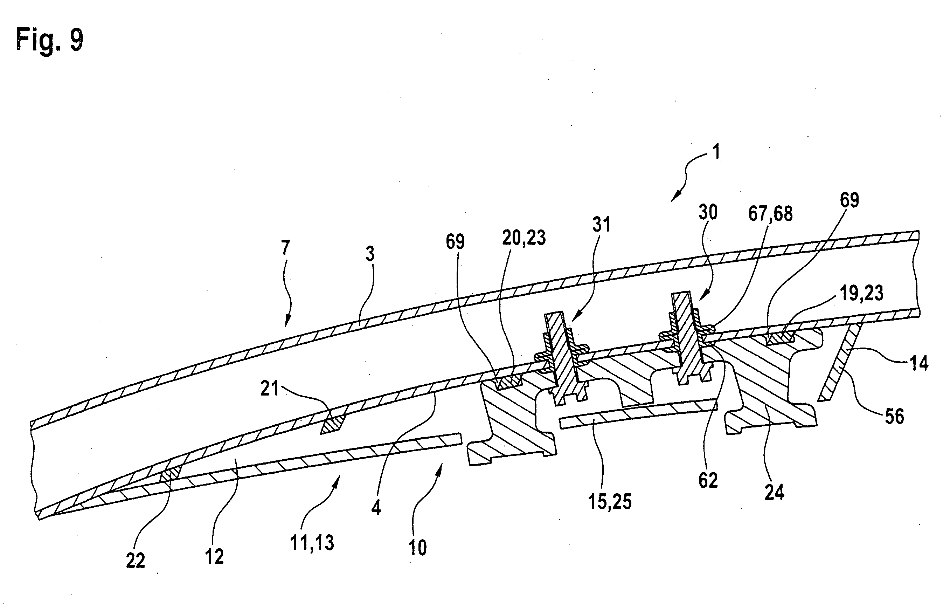

Die Figuren 7 und 8 verdeutlichen die Schraubverbindungen 30 und 31 in zwei verschiedenen Zuständen, und zwar: Figur 7 im nicht festgezogenen und Figur 8 im festgezogenen Zustand. Es ist erkennbar, dass die Nietmutter 32, 33 gemäß Figur 7 einen Gewindebereich 60 aufweist, an den sich ein Verformungsbereich 61 anschließt, der mit einem Kragen 62 abschließt. Die Gewindeschrauben 34 und 35 weisen einen Gewindeschaft 63 und einen Kopf 64 auf. Gewindebereich 60 und Verformungsbereich 61 bilden einen Befestigungsbereich 65. Bei dem Zusammenbau der Dachreling 1 wird zur Erzeugung der Schraubverbindungen 30 und 31 jeweils eine Nietmutter 32, 33 in eine Bohrung 66 (Figur 3) an der Unterseite des als Hohlprofil ausgebildeten Galeriestabs 1 von außen her eingesteckt, sodass der Kragen 62 an der Unterseite 4 des Galeriestabs 3 anliegt. Ferner wird jeweils eine Gewindeschraube 34, 35 durch die Befestigungsdurchbrüche 50, 51 des Stützelements 24 hindurchgesteckt und das jeweilige Ende des Gewindeschafts 63 gemäß Figur 7 in den Gewindebereich 60 der zugehörigen Nietmutter 32, 33 eingeschraubt. Wird nunmehr am Kopf 64 ein Werkzeug, beispielsweise ein Schraubendreher, angesetzt und die jeweilige Schraubverbindung 30, 31 angezogen, so verformt sich dabei der jeweilige Verformungsbereich 61 der zugehörigen Nietmutter 32, 33 in einen Zustand, so wie er aus der Figur 8 hervorgeht, d.h., der Verformungsbereich 61 wird zu einem Wulst 67 umgeformt, der einen Flansch 68 bildet, welcher sich an der Innenseite der Wandung des Hohlprofils des Galeriestabs 3 abstützt. Damit ist die jeweilige Nietmutter 32, 33 am Galeriestab 3 festgelegt und es ist damit möglich, Stützelement 24 und Galeriestab 3 gemäß Figur 3 miteinander zu verspannen. Dieser verspannte Zustand geht auch deutlich aus der Figur 9 hervor.

Die Figur 9 zeigt einen Längsschnitt durch die Dachreling 1 im Befestigungsbereich. Um die verschiedenen Bauteile der Dachreling 1 zusammenzufügen, wird wie folgt vorgegangen: Wie bereits beschreiben, werden die beiden Nietmuttern 32 und 33 in die Bohrungen 66 des Galeriestabs 3 eingesteckt und es werden die beiden Gewindeschrauben 34 und 35 in die Befestigungsdurchbrüche 50 und 51 eingesteckt. Ferner wird - von unten her - das Stützelement 24 in das Innere des Abdeckelements 14 eingebracht, derart, dass - wie aus Figur 9 hervorgeht - die beiden Stege 19 und 20, die die Befestigungsbereiche 23 bilden, in den Nuten 48 und 49 des Stützelements 24 einliegen. Selbstverständlich ist es auch möglich, das Abdeckelement 14 über das Stützelement 24 zu stülpen oder sowohl Abdeckelement 14 als auch Stützelement 24 aufeinander zuzubewegen. Wichtig ist dabei jedoch, dass - wie gesagt - die beiden Befestigungsbereiche 23 in den Nuten 48 und 49 einliegen. Nunmehr werden die beiden Schraubverbindungen 30 und 31 angezogen, wodurch sich die Situation gemäß Figur 9 ergibt, d.h., Stützelement 24 und Galeriestab 3 werden miteinander verspannt, wobei die Nietmuttern 32 und 33 in ihren vernieteten Zustand überführt werden. Durch das Verspannen von Stützelement 24 und Galeriestab 3 werden die Befestigungsbereiche 23 der Abdeckung 11 zwischen dem Stützelement 24 und dem Galeriestab 3 gehalten, insbesondere zwischen diesen Bauteilen eingeklemmt, wodurch die Abdeckung 11, nämlich das Abdeckelement 14, sicher gehalten wird. Mithin bilden die Innen-räume der Nuten 48 und 49 jeweils einen Spalt 69 aus, der jeweils den Befestigungsbereich 23 hält, insbesondere klemmend hält. Die Oberseiten der verbleibenden Stege 21 und 22 stützen sich vorzugsweise im montierten Zustand der Dachreling 1 an der Unterseite 4 des Galeriestabs 3 ab, so wie die aus der Figur 9 hervorgeht. Alternativ ist es auch möglich, dass das Vernieten der Nietmuttern 32, 33 vor dem Zusammenfügen der Bauteile der Dachreling 1 mittels einer speziellen Einrichtung erfolgt. Nunmehr wird das Bodenelement 15 derart in das Innere des Abdeckelements 14 eingebracht, dass die beiden Füße 28 und 29 aus den Öffnungen 26 und 27 gemäß Figur 9 herausschauen, wobei die Unterseite des plattenförmigen Bodenelements 15 mit der Unterkante des Abdeckelements 14 fluchtet. Insgesamt ergibt sich so die Situation gemäß Figur 9.

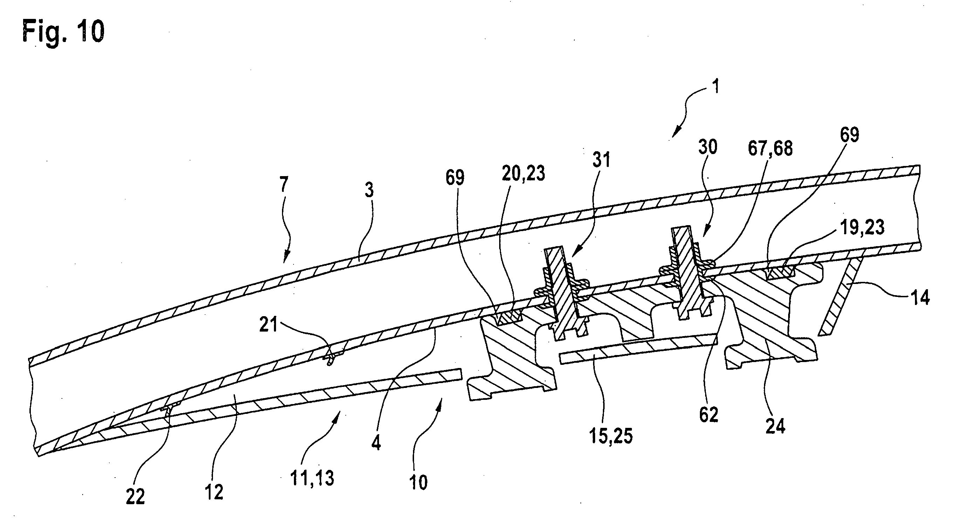

In Figur 9 ist das Abdeckelement 14 im Strangpressverfahren erstellt, es handelt sich also um ein Strangpressbauteil 56. Die Figur 10 zeigt ein weiteres Ausführungsbeispiel, sodass nachstehend nur auf die zur Figur 9 bestehenden Unterschiede eingegangen werden soll. Beim Ausführungsbeispiel der Figur 10 ist das Abdeckelement 14 der Abdeckung 11 nicht im Strangpressverfahren erstellt, sondern es handelt sich um ein Spritzgusskunststoffbauteil 75, was insbesondere daran erkennbar wird, dass die Stege 21 und 22 aufgrund ihrer T-förmigen Querschnittskontur nicht im Strangpressverfahren erstellbar sind. Ein derartiges Kunststoffbauteil wird vorzugsweise in einem weiteren Arbeitsgang mit einer Oberflächenbeschichtung versehen, um einen optischen Farbangleich zum aus Aluminium beziehungsweise einer Aluminiumlegierung.bestehenden Galeriestab 3 zu schaffen.

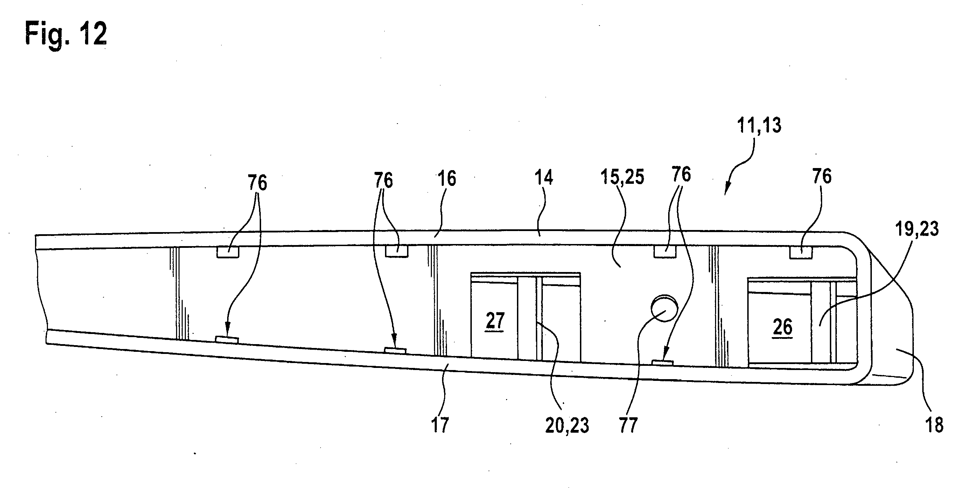

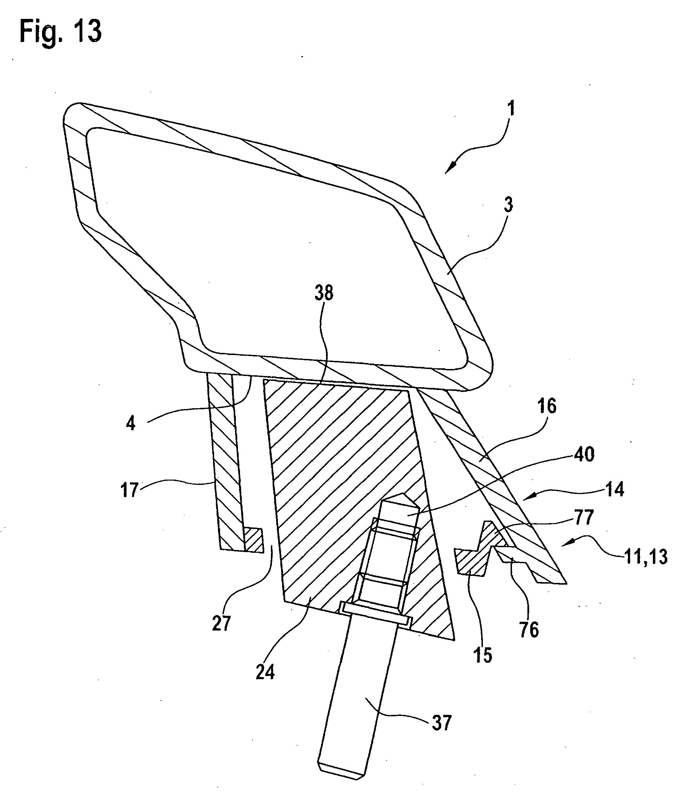

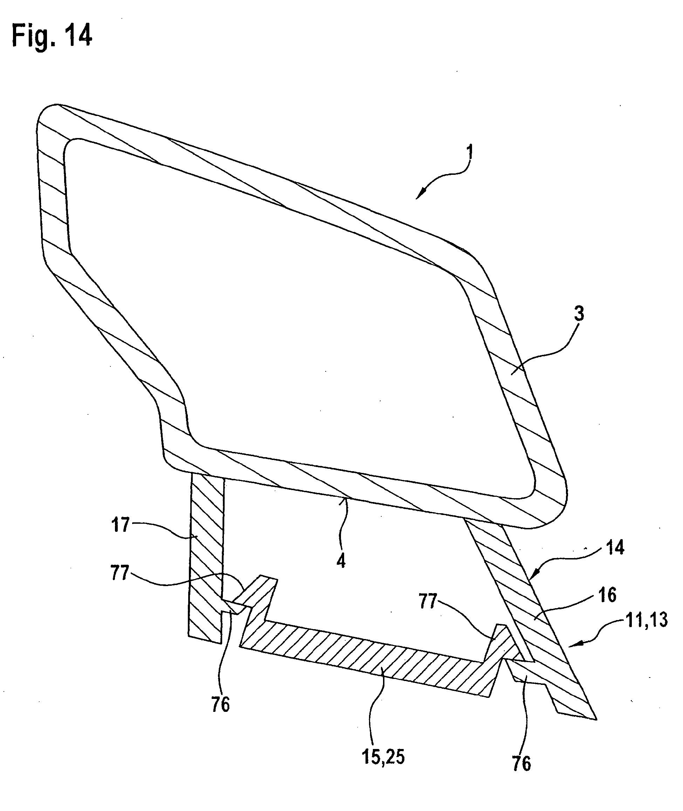

Die Figur 12 zeigt eine Unteransicht der Abdeckung 11, wobei das Bodenelement 15 in das Innere des Abdeckelements 14 eingeklipst ist. Dieser Klipszustand geht deutlich aus den Figuren 13 und 14 hervor. Das Verklipsen ist jedoch nur dann möglich, wenn die Abdeckung 11 nicht im Strangpressverfahren erstellt ist, sondern auf eine andere Art und Weise erzeugt ist, insbesondere als Spritzgussteil oder Druckgussteil oder Spritzgusskunststoffteil, da an der Innenseite der Seitenwände 16 und 17 Haltevorsprünge 76 angeformt sind, die von Rastnasen 77 des Bodenelements 15 rastend hintergriffen werden, wodurch auf diese Art und Weise das Bodenelement 15 am Abdeckelement 14 gehalten ist. Den Figuren 13 und 14 ist auch deutlich entnehmbar, dass der Galeriestab 3 als Hohlprofil ausgebildet ist. Ferner ist der Figur 13 entnehmbar, dass die Längserstreckung des Gewindebundbolzens 37 schräg verläuft zu den Seitenflächen des Stützelements 24. Dieser so gebildete Winkel ist abhängig von der individuellen Dachkonturlinie 2 des Dachs des Kraftfahrzeugs.

Es soll darauf hingewiesen werden, dass die Nuten 46 und 47 das Stützelement zur Aufnahme der Kragen 62 der Nietmuttern 32 und 33 dienen. Ferner ist das Bodenelement 15 mit einem Befestigungsloch 77 (Figur 12) versehen, um ein Befestigungselement für eine Unterlage aufzunehmen, die zwischen Dachreling 1 und Fahrzeugdach angeordnet werden kann. Das Befestigungselement stellt insbesondere auch eine Verbindung zum Fahrzeugdach her. Es kann vorzugsweise von der Stützwand 53 des Stützelements 24 gesichert/beaufschlagt werden. Auf diese Art und Weise kann das Bodenelement 15 alternativ auch vor der Montage der übrigen Teile der Dachreling 1 am Fahrzeug festgelegt werden.

Aufgrund der extrudierten Ausgestaltung des Stützelements 24 lässt sich - beispielsweise gegenüber einem Schmiedebauteil - eine leichtere Bauform realisieren, insbesondere cirka 60 % leichter, was pro Fahrzeug zu einer Gewichtsreduktion von cirka 0,5 kg führen kann. Ferner ergibt sich aufgrund der erfindungsgemäßen Bauform eine Stütze 24, die sehr schlank gebaut ist, insbesondere schmaler oder wesentlich schmaler als die Breitenabmessung des Galeriestabs, was bevorzugt aus der Figur 13 ersichtlich ist, wodurch sich ebenfalls eine Gewichtsreduktion ergibt und auch optische Vorteile. Sofern die Abdeckung 11, insbesondere das Abdeckelement 14, aus Kunststoffspritzguss erstellt ist, muss es lackiert werden, um der optischen Farbgebung des Galeriestabs 3 in etwa angeglichen zu sein. Gleiches gilt dann, wenn die Abdeckung 11, insbesondere das Abdeckelement 14, aus Platinen umgeformt wird, die beispielsweise auch aus Aluminium oder Aluminiumlegierung bestehen, wobei sich dann jedoch dennoch gegenüber dem Galeriestab 3 eine optische Abweichung ergibt, die im direkten Vergleich deutlich wahrnehmbar ist, da derartige Platinen gegenüber dem Material des Galeriestabs 3 geringfügig andere Legierungsbestandteile aufweisen. Diese Farbabweichung ist gegebenenfalls störend. Wird jedoch die Abdeckung 11, insbesondere das Abdeckelement 14, als Strangpressprofil aus Aluminium oder einer Aluminiumlegierung hergestellt, ebenso wie der Galeriestab, so ergibt sich exakt die gleiche Legierungszusammensetzung und eine exakt gleiche Farbgebung, unabhängig davon, ob eine Polierung auf Hochglanz oder eine Mattpolierung erfolgt und/oder ob ein Eloxieren vorgenommen wird. Dieses exakt gleiche Erscheinungsbild ist vorteilhaft. Als Extrusionslegierung für die genannten Bauteile, insbesondere Galeriestab 3, Abdeckelement 14 und/oder Stützelement 24 kommt vorzugsweise AlMgSi 0,5, Al 99,85 oder Al 99,9 in Frage. Dieses sind eloxalfähige Werkstoffe. Ferner wird für das Stützelement 24 bei den genannten Materialien eine hohe Festigkeit realisiert.

## Patentansprüche

1. Dachreling (1) für ein Kraftfahrzeug, mit mindestens einem Galeriestab und mit mindestens einem an dem Galeriestab (3) befestigten Stützelement (24) zur Überbrückung eines zwischen dem Galeriestab (3) und dem Dach des Kraftfahrzeugs ausgebildeten Abstands und zur Festlegung der Dachreling (1) am Dach des Kraftfahrzeugs, sowie mit mindestens einer Abdeckung (11) für das Stützelement (24), wobei Galeriestab (3), Stützelement (24) und Abdeckung (11) als separate Bauteile ausgebildet sind, wobei mindestens ein Endbereich (6) des Galeriestabs (3) als gebogener Abschnitt (7) ausgebildet ist, dessen Stirnende (8) ein Dachauflegeende (9) bildet, wobei sich Stützelement (24) und Abdeckung (11) zumindest teilweise im Bereich des gebogenen Abschnitts (7) befinden, **dadurch gekennzeichnet, dass** die Abdeckung (11) mindestens einen Befestigungsbereich (23) aufweist, der zur Befestigung der Abdeckung (11) in einem zwischen Galeriestab (3) und Stützelement (24) ausgebildeten Spalt (69) gehalten ist dass das Stützelement (24) als Strangpressteil (56) ausgebildet ist.

2. Dachreling nach Anspruch 1, **dadurch gekennzeichnet, dass** zwischen dem Endbereich (6) des Galeriestabs (3) und einer Dachkonturlinie (2) des Dachs ein Zwickel (10) ausgebildet ist, und dass die Abdeckung (11) als eine bis in eine Zwickelspitze (12) reichende Zwickelabdeckung (13) ausgebildet ist.

3. Dachreling nach einem der vorhergehenden Ansprüche, **dadurch gekennzeichnet, dass** die Abdeckung (11) in einer Seitenansicht der Dachreling (3) eine angenäherte Dreieckskontur aufweist.

4. Dachreling nach einem der vorhergehenden Ansprüche, **dadurch gekennzeichnet, dass** der Befestigungsbereich (23) nur durch zum einander Befestigen von Galeriestab (3) und Stützelement (24) erfolgenden Zusammenführen dieser Bauteile zwischen diesen Bauteilen im Spalt (69) gehalten ist.

5. Dachreling nach einem der vorherigen Ansprüche **dadurch gekennzeichnet, dass** das im Spalt (69) bewirkte Halten des Befestigungsbereichs (23) befestigungsmittelfrei erfolgt.

6. Dachreling nach einem der vorherigen Ansprüche **dadurch gekennzeichnet, dass** das im Spalt (69) bewirkte Halten des Befestigungsbereichs (23) durch Formschlusswirkung und/oder durch zwischen dem Galeriestab (3) und dem Stützelement (24) herrschende Klemmwirkung erfolgt.

7. Dachreling nach einem der vorherigen Ansprüche **dadurch gekennzeichnet, dass** sich an mindestens einer neben dem Spalt (69) liegenden Stelle der Galeriestab (3) unmittelbar am Stützelement (24) abstützt.

8. Dachreling nach einem der vorherigen Ansprüche **dadurch gekennzeichnet, dass** der Spalt (69) von mindestens einer randoffenen Ausnehmung (48',49'), insbesondere Nut (48,49), des Galeriestabs (3) und/oder des Stützelements (24) gebildet ist.

9. Dachreling nach einem der vorherigen Ansprüche **dadurch gekennzeichnet, dass** der Galeriestab (3), das Stützelement (24) und/oder die Abdeckung (11) jeweils einstückig ausgebildet sind.

10. Dachreling nach einem der vorherigen Ansprüche **dadurch gekennzeichnet, dass** Galeriestab (3) und/oder Abdeckung (11) jeweils als Strangpressbauteil (56) ausgebildet sind.

11. Dachreling nach einem der vorherigen_Ansprüche **dadurch gekennzeichnet, dass** Galeriestab (3) und/oder Abdeckung (11) jeweils als Spritzgussteil und/oder jeweils als Druckgussteil ausgebildet sind und/oder dass die Abdeckung (11) als Spritzgusskunststoffteil ausgebildet ist.

12. Dachreling nach einem der vorherigen Ansprüche **dadurch gekennzeichnet, dass** der Galeriestab (3), das Stützelement (24) und/oder die Abdeckung (11) jeweils aus Aluminium oder einer Aluminiumlegierung bestehen.

13. Dachreling nach einem der vorherigen Ansprüche **dadurch gekennzeichnet, dass** die Befestigung des Stützelements (24) an dem Galeriestab (3) mittels mindestens einer Schraubverbindung (30,31) erfolgt.

14. Dachreling nach einem der vorherigen Ansprüche **dadurch gekennzeichnet, dass** der Galeriestab (3), das Stützelement (24) und/oder die Abdeckung (11) jeweils als Hohlprofil ausgebildet sind.

15. Dachreling nach einem der vorherigen Ansprüche **dadurch gekennzeichnet, dass** die Schraubverbindung (30,31) eine Nietmutter (32,33), insbesondere eine durch Festziehen der Schraubverbindung (30,31) sich vernietende Nietmutter (32,33), aufweist, die dem Galeriestab (3) zugeordnet ist und dass das Stützelement (24) mindestens einen Befestigungsdurchbruch (50,51) besitzt, den eine in die Nietmutter (32,33) eingeschraubte Gewindeschraube (34,35) durchsetzt.

16. Dachreling nach einem der vorherigen Ansprüche **dadurch gekennzeichnet, dass** der Abdeckung (11) ein vorzugsweise plattenförmiges Bodenelement (15) zugeordnet ist.

17. Dachreling nach Anspruch 16 **dadurch gekennzeichnet, dass** das Bodenelement (15) mindestens eine Öffnung (26,27) besitzt, die von mindestens einem Fuß (28,29) des Stützelements (24) durchsetzt ist.

18. Dachreling nach einem der vorherigen Ansprüche 16 oder 17 **dadurch gekennzeichnet, dass** das Bodenelement (15) durch Klipswirkung und/oder Klemmwirkung an der Abdeckung (11) gehalten ist.

## Claims

1. Roof rail (1) for a motor vehicle, having at least one rack bar and having at least one support element (24) which is fixed to the rack bar (3) for bridging a spacing which is formed between the rack bar (3) and the roof of the motor vehicle and for fixing the roof rail (1) to the roof of the motor vehicle, and having at least one cover (11) for the support element (24), wherein the rack bar (3), support element (24) and cover (11) are configured as separate components, wherein at least one end region (6) of the rack bar (3) is in the form of a bent portion (7) whose front end (8) forms a roof application end (9), wherein the support element (24) and cover (11) are located at least partially in the region of the bent portion (7), **characterized in that** the cover (11) has at least one fixing region (23) which is retained in order to fix the cover (11) in a gap (69) formed between the rack bar (3) and the support element (24), and that the support element (24) is in the form of an extrusion component (56).

2. Roof rail according to Claim 1, **characterized in that** a spandrel (10) is formed between the end region (6) of the rack bar (3) and a roof contour line (2) of the roof and **in that** the cover (11) is in the form of a spandrel cover (13) which extends as far as into a spandrel tip (12).

3. Roof rail according to any one of the preceding claims, **characterized in that** the cover (11) has an approximately triangular contour in a side view of the roof rail (3).

4. Roof rail according to any one of the preceding claims, **characterized in that** the fixing region (23) is retained in the gap (69) between the rack bar (3) and the support element (24) only by guiding together the rack bar (3) and the support element (24), which guiding is carried out to fix those components to each other.

5. Roof rail according to any one of the preceding claims, **characterized in that** the retention of the fixing region (23) brought about in the gap (69) is carried out without fixing means.

6. Roof rail according to any one of the preceding claims, **characterized in that** the retention of the fixing region (23) brought about in the gap (69) is carried out by a positive-locking action and/or by a clamping action, which is present between the rack bar (3) and the support element (24).

7. Roof rail according to any one of the preceding claims, **characterized in that** the rack bar (3) is supported directly on the support element (24) at least at one location beside the gap (69).

8. Roof rail according to any one of the preceding claims, **characterized in that** the gap (69) is formed by at least one peripherally open recess (48', 49'), in particular groove (48, 49), of the rack bar (3) and/or support element (24).

9. Roof rail according to any one of the preceding claims, **characterized in that** the rack bar (3), support element (24) and/or cover (11) are each configured integrally.

10. Roof rail according to any one of the preceding claims, **characterized in that** the rack bar (3) and/or cover (11) are in the form of an extrusion component (56).

11. Roof rail according to any one of the preceding claims, **characterized in that** the rack bar (3) and/or cover (11) are each configured as an injection-moulded component and/or as a diecast component and/or **in that** the cover (11) is in the form of an injection-moulded plastics component.

12. Roof rail according to any one of the preceding claims, **characterized in that** the rack bar (3), support element (24) and/or cover (11) each consist of aluminium or an aluminium alloy.

13. Roof rail according to any one of the preceding claims, **characterized in that** the fixing of the support element (24) to the rack bar (3) is brought about by means of at least one screwed connection (30, 31).

14. Roof rail according to any one of the preceding claims, **characterized in that** the rack bar (3), support element (24) and/or cover (11) are each in the form of a hollow profile-member.

15. Roof rail according to any one of the preceding claims, **characterized in that** the screwed connection (30, 31) has a rivet nut (32, 33), in particular a rivet nut (32, 33) which is riveted by tightening the screwed connection (30, 31) and which is associated with the rack bar (3), and **in that** the support element (24) has at least one fixing hole (50, 51), through which a threaded screw (34, 35) which is screwed into the rivet nut (32, 33) extends.

16. Roof rail according to any one of the preceding claims, **characterized in that** a preferably plate-like base element (15) is associated with the cover (11).

17. Roof rail according to claim 16, **characterized in that** the base element (15) has at least one opening (26, 27), through which at least one foot (28, 29) of the support element (24) extends.

18. Roof rail according to one of the preceding claims 16 or 17, **characterized in that** the base element (15) is retained on the cover (11) by means of a clip-fit action and/or clamping action.

## Revendications

1. Galerie de toit (1) pour un véhicule automobile, avec au moins une barre de galerie et avec au moins un élément d'appui (24) fixé sur la barre de galerie (3), pour surmonter une distance formée entre la barre de galerie (3) et le toit du véhicule automobile, et pour fixer la galerie de toit (1) sur le toit du véhicule automobile, et avec au moins un recouvrement (11) pour l'élément d'appui (24), dans laquelle la barre de galerie (3), l'élément d'appui (24) et le recouvrement (11) sont configurés en tant qu'éléments séparés, dans laquelle au moins une région d'extrémité (6) de la barre de galerie (3) est configurée sous forme de partie recourbée (7), dont l'extrémité frontale (8) forme une extrémité d'appui de toit (9), l'élément d'appui (24) et le recouvrement (11) étant d'au moins partiellement disposés au niveau de la partie recourbée (7), **caractérisée en ce que** le recouvrement (11) présente au moins une région de fixation (23) qui est retenue dans une fente (69) formée entre la barre de galerie (3) et l'élément d'appui (24) pour la fixation du recouvrement (11), et **en ce que** l'élément d'appui (24) est configuré sous forme de pièce extrudée (56).

2. Galerie de toit selon la revendication 1, **caractérisée en ce qu'**un écoinçon (10) est formé entre la région d'extrémité (6) de la barre de galerie (3) et une ligne de contour (2) du toit, et **en ce que** le recouvrement (11) est configuré en tant que recouvrement de gousset (13) qui s'étend jusqu'à une pointe de gousset (12).

3. Galerie de toit selon l'une quelconque des revendications précédentes, **caractérisée en ce que,** dans une vue latérale de la galerie de toit (3), le recouvrement (11) présente la forme approximative d'un triangle.

4. Galerie de toit selon l'une quelconque des revendications précédentes, **caractérisée en ce que** la région de fixation (23) est maintenue dans la fente (69) entre la barre de galerie (3) et l'élément d'appui (24) seulement par l'assemblage de ceux-ci afin de les fixer l'un à l'autre.

5. Galerie de toit selon l'une quelconque des revendications précédentes, **caractérisée en ce que** l'arrêt de la région de fixation (23) dans la fente (69) est effectué sans moyens de fixation.

6. Galerie de toit selon l'une quelconque des revendications précédentes, **caractérisée en ce que** l'arrêt de la région de fixation (23) dans la fente (69) est effectué par engagement positif et/ou par effet de serrage entre la barre de galerie (3) et l'élément d'appui (24).

7. Galerie de toit selon l'une quelconque des revendications précédentes, **caractérisée en ce que** la barre de galerie (3) s'appuie immédiatement sur l'élément d'appui (24), à au moins une position à côté de la fente (69).

8. Galerie de toit selon l'une quelconque des revendications précédentes, **caractérisée en ce que** la fente (69) est formée par au moins un évidement (48', 49') à bord ouvert, notamment une rainure (48, 49), de la barre de galerie (3) et/ou de l'élément d'appui (24).

9. Galerie de toit selon l'une quelconque des revendications précédentes, **caractérisée en ce que** la barre de galerie (3), l'élément d'appui (24) et/ou le recouvrement (11) sont respectivement réalisés d'une seule pièce.

10. Galerie de toit selon l'une quelconque des revendications précédentes, **caractérisée en ce que** la barre de galerie (3) et/ou le recouvrement (11) sont respectivement configurés en tant que composants extrudés (56).

11. Galerie de toit selon l'une quelconque des revendications précédentes, **caractérisée en ce que** la barre de galerie (3) et/ou le recouvrement (11) sont respectivement configurés sous forme de pièce moulée par injection et/ou sous forme de pièce coulée sous pression, et/ou **en ce que** le recouvrement (11) est configuré sous forme de pièce en plastique moulée par injection.

12. Galerie de toit selon l'une quelconque des revendications précédentes, **caractérisée en ce que** la barre de galerie (3), l'élément d'appui (24) et/ou le recouvrement (11) sont respectivement constitués d'aluminium ou d'un alliage d'aluminium.

13. Galerie de toit selon l'une quelconque des revendications précédentes, **caractérisée en ce que** la fixation de l'élément d'appui (24) sur la barre de galerie (3) est effectuée par au moins un raccord à vis (30, 31).

14. Galerie de toit selon l'une quelconque des revendications précédentes, **caractérisée en ce que** la barre de galerie (3), l'élément d'appui (24) et/ou le recouvrement (11) sont respectivement configurés sous forme de profilé creux.

15. Galerie de toit selon l'une quelconque des revendications précédentes, **caractérisée en ce que** le raccord à vis (30, 31) présente un écrou à river (32, 33) associé à la barre de galerie (3), notamment un écrou à river (32, 33) se rivetant par serrage du raccord à vis (30, 31), et **en ce que** l'élément d'appui (24) présente au moins un perçage de fixation (50, 51) traversé par une vis filetée (34, 35) vissée dans l'écrou à river (32, 33).

16. Galerie de toit selon l'une quelconque des revendications précédentes, **caractérisée en ce que** le recouvrement (11) est associé avec un élément de base (15), de préférence sous forme de plaque.

17. Galerie de toit selon la revendication 16, **caractérisée en ce que** l'élément de base (15) présente au moins une ouverture (26, 27) qui est traversée par au moins un pied (28, 29) de l'élément d'appui (24).

18. Galerie de toit selon l'une quelconque des revendications 16 ou 17, **caractérisée en ce que** l'élément de base (15) est retenu sur le recouvrement (11) par effet de clipsage et/ou serrage.
